# EUROPEAN PATENT APPLICATION

(11) **EP 1 227 625 A1**
(43) Date of publication of application: **31.07.2002**
(21) Application number: 01440020.4
(22) Date of filing: 30.01.2001
(51) Int. Cl.: H04L 12/56

(54) **Improved data packet transmission method**

(71) Applicant: ALCATEL, 75008 Paris (FR)
(72) Inventor: Martin, Béatrice, 75005 Paris (FR)
(74) Representative: Rausch, Gabriele, Dr.

(57) **Abstract**

The present invention concerns a data packet transmission method for transmission over a wireless communication system, more especially a multiple access network, wherein said data packet comprises a field related to or indicating the remaining life duration of the said data packet, method characterised in that it comprises the step of modifying at least one transmission parameter and/or resource alloted to said data packet, during its transmission through the network, in order to increase its transmission efficiency when the value contained in that field becomes lower than or equal to a predefined threshold value.

## Description

The present invention concerns generally the transmission of data in a multiple access network and more particularly an improved data packet transmission method, especially with improved transport format.

When transmitting data packets (for example Internet Protocol Packets) in a wireless multiple access system, a so-called "transport format" is chosen determining the transmission conditions and resources for said packets. Other transmission parameters are also set, like for example the transmission power or transmission channel(s) or frequency(ies).

For instance, in a CDMA (Code Division Multiple Access) system, the transport format is determined by the used spreading factor and in a TDMA (Time Division Multiple Access) system the transport format is given by the number of time slots allocated to a user for transmission.

Choosing a transport format has a direct impact on the effective bit rate over the radio interface since, for example, the spreading factor defines how many chips represent one bit of information.

Several transport formats (i.e. for example a set of different spreading factors) may be available for a user depending on the QoS (Quality of Service) required by or for this user.

A proper or optimized use of the available transport formats should improve the transmission quality, reduce interference in the network and increase the working level, capacity and the efficiency of the network.

It is known, from prior art, to make the transport format (i.e. the spreading factor) dependent from the instantaneous source data rate. For example the spreading factor is reduced for high incoming data rate and increased when the incoming data rate decreases. This ensures that the incoming data are transmitted without being delayed in case of variable bit rate incoming traffic.

This method does not at all take into account varying propagation conditions that might require a lot of retransmissions before the data are properly received. This high number of retransmissions cause delay in the network.

It is also known, for example from US-A-5, 490, 144, to realize a dynamic control of the spreading factor by utilizing a retry count. The spreading factor is modified upon receipt of the retry count transmitted by the subscriber units to a base site, the latter then sending a new spreading factor to all of the subscriber units, which is determined by using the retry count-based scheme described in the cited document.

Even if this solution allows to make the transport format dependent on the propagation conditions, the possible modifications of the factor are only effective with more or less delay and therefore not in direct accordance with the current propagation conditions, nor with the propagation condition encountered by a particular packet, as the modification of the spreading factor applies identically to at least a part of the system.

It is an object of the present invention to overcome the foregoing limitations and to provide a better data packet radio transmission management on the air interface.

The present invention meets this object by providing a data, packet transmission method for transmission over a wireless communication system, more especially a multiple access network, wherein said data packet comprises a field related to or indicating the remaining life duration of the said data packet, method characterised in that it comprises the step of modifying at least one transmission parameter and/or resource, for example the transport format or the transmission power or energy alloted to said data packet, during its transmission through the network, in order to increase its transmission efficiency when the value contained in that field becomes lower than or equal to a predefined threshold value.

This method may also comprise the step of repeating the transmission conditions modification step, once or more, with progressively increasing efficiency levels and lower associated predefined threshold values.

According to a first embodiment of the invention, there is provided that, when at least two transport formats having different efficiency levels are available for sending said data packet, the method comprises the steps of:
- using a first less efficient transport format for sending said data packet as long as said field contains a value higher than a corresponding predefined threshold value ;
- changing the transport format from said first transport format to a second more efficient transport format for sending said data packet, when the value contained in said field is lower than or equal to said predefined threshold value.

According to the invention the transport format or any other transmission parameter of a given data packet, and so the transmission resources dedicated to its transmission, is made directly dependent on the current propagation conditions encountered by said particular data packet.

In a first alternative realization of the invention, easy to realize practically, two different transport formats are available associated to one predefined threshold value, one format being less efficient than the other.

In a second, more sophisticated and more flexible, alternative realization of the invention, more than two different transport formats are available, each of said formats being associated to a predefined threshold value, except for the most efficient transport format.

For instance in an IP transmission, the propagation conditions may be easily checked thanks to the field called "Time To Live" (TTL) available in each IP Packet to be transmitted with the radio interface.

This field is contained within the header of said packets, coded on 8 bits with a unit generally equal to one second. This field is set by the transmitter or it can for example be set according to EP-application n° 00440240.0 in the name of the applicant.

The TTL field determines the number of retransmission a packet may still experience on a communication path, before being discarded.

Each time the packet passes through a router, the router decrements the "Time To Live". If the "Time To Live" field reaches the value of zero, the router discards the packet and the latter is lost. While the "Time To Live" field is non-zero, the packet continues to transit through routers, until it reaches the addressee.

In a cellular system, to reach a user equipment, the router has to choose a transiting cell. In case a packet is not successfully transmitted, a router may try to transfer the packet through another cell. In the same time, it decrements the "Time To Live".

The basic idea of the invention provides that, if the remaining TTL is smaller than a predefined value, the transport format is changed in a way that the data packet is more likely to be successfully transmitted.

When the wireless communication network is based on CDMA, then modifying or changing the transport format of a data packet consists in modifying or changing the spreading factor applied to said data packet.

Thus, a lower spreading factor (i.e. a higher data rate) is allocated if the "Time To Live" equals a low value. A greater spreading factor (i.e. a lower data rate) is allocated if the "Time To Live" equals a high value.

For example, the spreading factor has to be decreased to reduce the packet duration and reduce the packet exposition to interference.

The dynamic change of the spreading factor can for example be signalized on the physical layer.

When the wireless communication network is based on TDMA, then modifying or changing the transport format of a data packet consists in modifying or changing the number of time slots allocated to the transmission of said data packet.

Thus, some more time slots are allocated (thus allowing an higher data rate) if the "Time To Live" is low. Some less time slots (i.e. lower data rate) are allocated if the "Time To Live" equals a high value.

When the wireless communication network is based on TD-CDMA, then modifying or changing the transport format of a data packet consists in modifying or changing the spreading factor and the number of time slots associated to the transmission of said data packet.

When the said wireless communication network is based on FDMA, modifying the transport format of a data packet consists in modifying the number of frequencies alloted to the transmission of said data packet.

In all various embodiments mentioned herein before, the invention provides that, if for a given packet the TTL is close to zero, the transmission priority of said packet is temporarily increased before its possible death.

According to a second embodiment of the invention, which can be possibly combined with the first embodiment, the or one of the transmission parameter(s) which is modified is the transmission power.

The present invention also concerns a wireless communication system, especially multiple access network, comprising in particular a plurality of routers or similar transmission and routing devices, characterised in that said system is adapted for implementing the data packet transmission method as described before.

According to a first feature of the invention, each of said routers comprises means for reading, in the header of each incoming data packet, the value stored in the field indicating the remaining life duration of the data packets passing through said router, means for comparing said value to a predefined threshold value depending on the transport format of each considered incoming data packet, means for changing the spreading factor, the number of time slots, the number of transmission frequencies and/or the transmission power allocated for further transmission of each of the considered data packets, depending on the result of said comparison and means for decrementing the life duration value of each of said data packet before transmitting it.

According to an other feature of the invention, said communication system consists in a multiple access network belonging to the group comprising the CDMA networks, the TDMA networks, the TD-CDMA networks and the FDMA (Frequency Division Multiple Access) networks.

Finally, the invention also concerns a terminal, especially a mobile terminal, to be used in connection with a wireless communication system as described before.
The present invention is, of course, not limited to the preferred embodiment described herein, changes can be made or equivalents used without departing from the scope of the invention.

## Claims

1. Data packet transmission method for transmission over a wireless communication system, more especially a multiple access network, wherein said data packet comprises a field related to or indicating the remaining life duration of the said data packet, method **characterised in that** it comprises the step of modifying at least one transmission parameter and/or resource alloted to said data packet, during its transmission through the network, in order to increase its transmission efficiency when the value contained **in that** field becomes lower than or equal to a predefined threshold value.

2. Method according to claim 1, **characterised in that** it comprises also the step of repeating the transmission conditions modification step, once or more, with progressively increasing efficiency levels and lower associated predefined threshold values.

3. Method according to anyone of claims 1 and 2, **characterised in that**, when at least two transport formats having different efficiency levels are available for sending said data packet, the method comprises the steps of:
- using a first less efficient transport format for sending said data packet as long as said field contains a value higher than a corresponding predefined threshold value ;
- changing the transport format from said first transport format to a second more efficient transport format for sending said data packet, when the value contained in said field is lower than or equal to said predefined threshold value.

4. Method according to claim 3, **characterised in that** two different transport formats are available associated to one predefined threshold value, one format being less efficient than the other.

5. Method according to claim 3, **characterised in that** more than two different transport formats are available, each of said formats being associated to a predefined threshold value, except for the most efficient transport format.

6. Method according to any one of claims 3 to 5, **characterised in that** said wireless communication network is based on CDMA and **in that** modifying or changing the transport format of a data packet consists in modifying or changing the spreading factor applied to said data packet.

7. Method according to any of claims 3 to 5, **characterised in that** said wireless communication network is based on TDMA and **in that** modifying or changing the transport format of a data packet consists in modifying or changing the number of time slots allocated to the transmission of said data packet.

8. Method according to any of claims 3 to 5, **characterised in that** said wireless communication network is based on TD-CDMA and **in that** modifying or changing the transport format of a data packet consists in modifying or changing the spreading factor and the number of time slots associated to the transmission of said data packet.

9. Method according to any of claims 3 to 5, **characterised in that** said wireless communication network is based on FDMA and **in that** modifying the transport format of a data packet consists in modifying the number of frequencies alloted to the transmission of said data packet.

10. Method according to any of claims 1 to 9, **characterised in that** the or one of the transmission parameter(s) which is modified is the transmission power.

11. Wireless communication system, specially multiple access network, comprising in particular a plurality of routers or similar transmission and routing devices, **characterised in that** said system is adapted for implementing the data packet transmission method according to any of claims 1 to 10.

12. Communication system according to claim 11,
**characterised in that** each of said routers comprises means for reading, in the header of each incoming data packet, the value stored in the field indicating the remaining life duration of the data packets passing through said router, means for comparing said value to a predefined threshold value depending on the transport format of each considered incoming data packet, means for changing the spreading factor, the number of time slots, the number of transmission frequencies and/or the transmission power allocated for further transmission of each of the considered data packets, depending on the result of said comparison and means for decrementing the life duration value of each of said data packet before transmitting it.

13. Communication system according to anyone of claims 11 and 12, **characterised in that** it consists in a multiple access network belonging to the group comprising the CDMA networks, the TDMA networks, the TD-CDMA networks and the FDMA networks.

14. Terminal, especially a mobile terminal, to be used in connection with a wireless communication system according to anyone of claims 11 to 13.
